# EUROPÄISCHE PATENTSCHRIFT

(11) **EP 1 344 970 B1**
(45) Veröffentlichungstag und Bekanntmachung des Hinweises auf die Patenterteilung: **15.02.2006**
(21) Anmeldenummer: 03005299.7
(22) Anmeldetag: 11.03.2003
(51) Int. Cl.: F16L 21/03, F16L 47/06

(54) **Ringdichtungselement**
Annular sealing element
Elément d'étanchéité annulaire

(30) Priorität: 16.03.2002 DE 20204239 U
(43) Veröffentlichungstag der Anmeldung: 17.09.2003
(73) Patentinhaber: Funke Kunststoffe GmbH, 59071 Hamm-Uentrop (DE)
(72) Erfinder: Funke, Norbert, 48324 Sendenhorst (DE)
(74) Vertreter: Hoffmeister, Helmut

(56) Entgegenhaltungen:
- EP-A- 1 170 538
- DE-A- 1 750 390
- DE-B- 1 247 773
- GB-A- 2 218 166
- US-A- 4 368 894

## Beschreibung

Die Erfindung betrifft ein Ringdichtungselement mit den Merkmalen des Oberbegriffs des Anspruchs 1.

Ein gattungsgemäßes Ringdichtungselement ist aus der US-PS 4 368 894 bekannt. Es ist jedoch zur Einlage in eine Dichtungskammer an einem Rohr bestimmt, die einen kreissegmentförmigen Querschnitt aufweist. Aus diesem Grund sind mehrere fingerförmige Rippen vorgesehen, die sich mit gleicher Länge strahlenförmig von dem Zentrum der Krümmung der Dichtungskammer aus nach außen erstrecken. Das Rohrdichtungselement muss über einen Stahlring vorgespannt werden, was die Herstellung verteuert und die manuelle Montage erschwert. Ein Toleranzausgleich in radialer Richtung ist aufgrund des Stahlrings nicht möglich. Die strahlenförmige Ausrichtung der Rippen erlaubt zwar eine axiale Abstützung im Moment des Einfügens des Spitzendes bei einer Rohrverbindung. Für die Dichtwirkung bei der einmal hergestellten Rohrverbindung ist aber ausschließlich das Rückstellvermögen des Rohrdichtungselements in radialer Richtung ausschlaggebend. Da keine der Rippen bei der bekannten Dichtung in dieser Hauptkraftrichtung ausgerichtet ist, führen die innerhalb der Rohrverbindung auftretenden radialen Kräfte zu einem seitlichen Wegbiegen der Rippen. Zudem ist ein Einsatz dieser Dichtung in den in Europa üblichen Dichtungskammern mit einem in etwa rechteckigen oder leicht trapezförmigen Querschnitt nicht möglich.

Aus der EP 0 283 729 B1 ist ein Rohrverbinder für Kunststoffrohre bekannt. Die Kunststoffrohre weisen ein Einsteckende mit einer extrusionsglatten Oberfläche und eine Muffe auf. In der Muffe ist eine Aufnahmerille für einen lose eingelegten Dichtungsring angeordnet. Der Dichtungsring besteht einstückig aus einem in den trapezförmigen Querschnitt der Aufnahmerille mit Anlageflächen eingepassten Halteringteilstück und zwei demgegenüber trichterförmig eingezogenen Dichtungslippenteilstücken. Die Dichtungslippenteilstücke tragen noch zusätzlich Dichtungsrippen.

Nachteilig ist, dass der Dichtungsring kompliziert und aufwendig aufgebaut ist. Darüber hinaus muss das Halterungsteilstück immer so in die Aufnahmerille eingesetzt werden, dass das Einsteckende zuerst auf das eingepasste Halteringteilstück und erst danach auf die beiden Dichtungslippenteilstücke auftrifft, denn nur so kann der Dichtungsring seine abdichtenden Eigenschaften entfalten. Wird der Dichtring mit den beiden Dichtungslippenteilstücken nach vorne eingelegt, entsteht eine undichte Rohrverbindung.

Aus der EP 0 426 147 A2 ist eine Rohrverbindung für Rohre bekannt, die aus einem Kunststoffrohr besteht, das von einem Betonrohr umgeben ist. Am Muffenende dieser Inliner-Rohre ist eine Dichtungskammer angeordnet, in die eine Ringdichtung eingelegt ist, über die das freigelegte Kunststoffrohr des Spitzendes geschoben wird. Eine zweite Ringdichtung befindet sich zwischen dem Spitz- und dem Muffenende der Betonrohre. Die Ringdichtungen sind im ungepressten Zustand im Querschnitt im wesentlichen rund und füllen im gepressten Zustand die Dichtungskammer wenigstens teilweise aus.

Nachteilig ist, dass die Ringdichtung zwar einfach ist, aber beim Einschieben des Spitzendes aus der Dichtungskammer herausrollen können. Um das vermeiden, werden Lippendichtungen eingesetzt, die nur in Einschieberichtung des Spitzendes in die Dichtungskammer eingesetzt werden können.

Aus der CH-PS 534 321 ist ein Betonrohr bekannt, bei dem jedes Rohrende an der Stelle, wo es mit dem anderen Rohr in Eingriff kommt, mit einer folienförmigen Auskleidung bedeckt ist, die mit der Auskleidung im Inneren des Rohres verbunden ist.

Zwischen dem Spitz- und dem Muffenende zweier zu verbindender Rohre ist eine Ringdichtung positioniert, die aber gegen seitliches Verschieben verankert werden muss.

Es stellt sich deshalb die Aufgabe ein Ringdichtungselement der eingangs genannten Art so weiter zu entwickeln, dass es einfach in eine Dichtungskammer eingelegt werden kann und dabei gute Abdichtungseigenschaften entwickelt.

Erfindungsgemäß wird diese Aufgabe durch ein Ringdichtungselement mit den Merkmalen des Anspruchs 1 gelöst.

Die mit der Erfindung erzielten Vorteile bestehen insbesondere darin, dass das Ringdichtungselement so aufgebaut ist, dass es auch ohne Fachkenntnisse sicher in die Dichtungskammer eingelegt werden kann. Das Ringdichtungselement ist zwar einfach für den Gebrauch, aber für die Flüssigkeitsabdichtung sehr komfortabel aufgebaut. Die verschiedenen Wölbungen im Dichtungsring-Innenseitenelement sorgen dafür, dass der Ringkörper beim Einschieben des Spitzendes eine gezielte und abgestufte Anpresskraft entwickelt. Diese wird durch die Elastizität des Ringkörpers unterstützt. Die kreissegmentförmig ausgebildete Außenseitenwölbung sorgt für einen einwandfreien Kontakt der Ringdichtung. Im zusammengepressten Zustand wird die Außenseitenwölbung noch großflächiger an das Spitzende herangedrückt und bewirkt so eine großflächige Abdichtung mit einer abgestuften Abdichtungskraft. Dadurch, dass die beiden Außenfuß-Ringelemente im unverformten Zustand des Ringkörpers weiter aus dem Dichtungsring-Innenseitenelement herausstehen als die beiden Innenfuß-Ringelemente, wird eine abgestimmte Auflage beider Fußring-Elemente gesichert.

Die Seitenwandelemente können wenigstens teilweise keilförmig zueinander angeordnet sein. Hierdurch ist der Ringkörper im Wesentlichen der Form der Dichtungskammer angepasst und bewirkt eine sehr gute Halterung in der Dichtungskammer.

An wenigstens einem der Seitenwandelemente kann wenigstens ein teilweise durchgehender Stützschulterkörper angeformt sein. Es kann aber auch an beiden Seitenwandelementen jeweils ein Stützschulterkörper angeformt werden. In beiden Fällen wird sichergestellt, dass Breitentoleranzen der Dichtungskammern ausgeglichen werden. Der Ringkörper wird so in jedem Fall fest verpresst in der Dichtungskammer gehalten.

Der Ringkörper mit seinen beiden Außen- und Innenfuß-Ringelementen und den beiden Stützschulterkörpern kann aus einem Elastomer geformt sein. Das Elastomer kann ein Gummi oder ein Weichkunststoff sein. Er kann eine Shore-Härte A zwischen 30 und 50 haben. Vorzugsweise beträgt die Härte 50 Shore-A.

Das erfindungsgemäße Ringdichtungselement wird vorzugsweise in einer Vorrichtung für eine Verbindung zweier Rohrkörper eingesetzt, die jeweils mit einem Muffen- und einem Spitzende versehen sind, wobei wenigstens im Muffenende wenigstens eine Dichtungskammer mit rechteckigem Querschnitt angeordnet ist.

In der Vorrichtung kann das Ringdichtungselement sowohl mit dem ersten als auch mit dem zweiten Seitenwandelement zur Einsteckrichtung des Spitzendes angeordnet werden. Hierdurch wird aus der normalen Ringdichtung eine Universal-Rohrdichtung, die beliebig in die Dichtungskammer eingelegt werden kann. Auf die Einsteckrichtung des Spitzendes braucht nicht mehr geachtet zu werden. Die Universal-Rohrdichtung entwickelt in jeder Lage, in der sie in die Dichtungskammer eingelegt ist, immer die gleichen Dichtungseigenschaften.

Für die Anordnung der Dichtungskammer gibt es die unterschiedlichsten Möglichkeiten. In der Regel ist die Dichtungskammer im Muffenende angeordnet. Sie kann aber auch im Spitzende angeordnet sein. Möglich ist es auch, dass sie sowohl im Muffenende als auch im Spitzende angeordnet sein kann.

Darüber hinaus ist es möglich, dass anstelle einer Dichtungskammer in den beschriebenen Enden zwei Dichtungskammern angeordnet sein können. Wo und wie viele Dichtungskammern vorgesehen werden, hängt von den jeweiligen Einsatzbedingungen ab.

Im Folgenden wird die Erfindung anhand der lediglich ein Ausführungsbeispiel darstellenden Zeichnung näher erläutert.
Es zeigen:
- Fig. 1: eine Rohrverbindung in einem schematisch dargestellten Axialschnitt,
- Fig. 2: einen vergrößerten Ausschnitt aus einer Rohrverbindung gemäß Fig. 1,
- Fig. 3: ein Muffenende für eine Rohrverbindung gemäß Fig. 1 und 2 mit eingelegtem Ringdichtungselement in einem schematisch dargestellten Axialschnitt, und
- Fig. 4: ein Ringdichtungselement gemäß Fig. 3 in einem vergrößert dargestellten Axialschnitt.

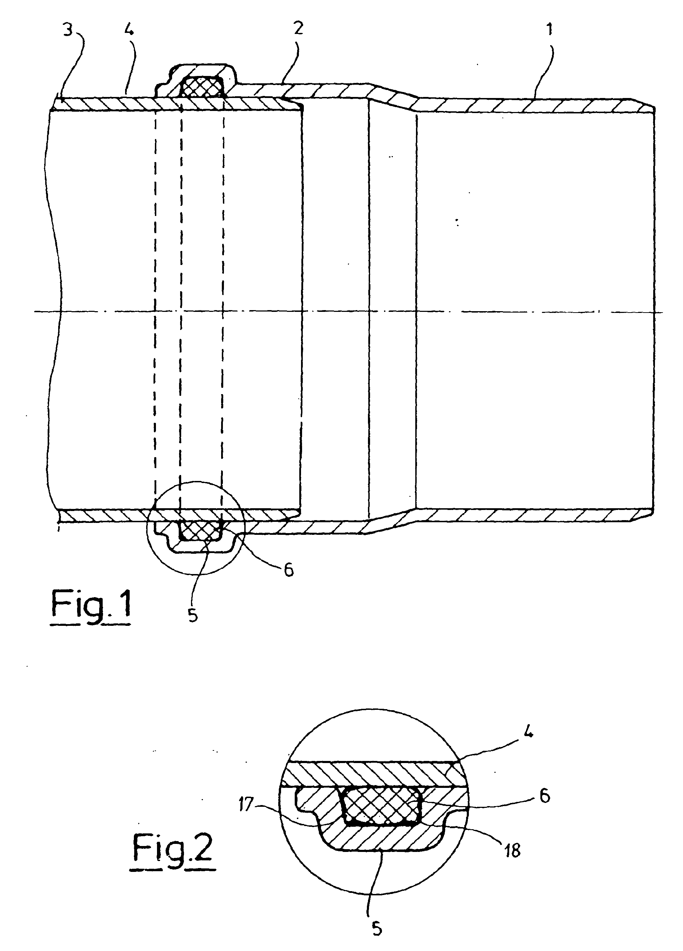

In Fig. 1 ist eine Rohrverbindung zwischen zwei Kunststoffrohren 1, 3 gezeigt. Jedes Kunststoffrohr endet an einer Seite in einem Muffenende 2 und am gegenüberliegenden Ende in einem Spitzende 4.

In dem Muffenende 2 ist eine Dichtungskammer 5 eingeformt. In die Dichtungskammer ist ein Ringdichtungselement 6 eingesetzt, das in einem Maßstab 1 : 1 in Fig. 4 dargestellt ist.

Es besteht aus einem Ringkörper 9 aus einem Gummi oder einem Weichkunststoff, der eine Härte von 50 Shore-A aufweist. Der Ringkörper 9 wird durch
- ein Dichtungsring-Innenseitenelement 7,
- ein Dichtungsring-Außenseitenelement 8 und
- zwei Seitenwandelemente 15, 16, die mit den Seitenelementen 7, 8 verbunden sind,
begrenzt.

Das Dichtungsring-Außenseitenelement 8 ist als eine kreissegmentförmig ausgebildete Außenseitenwölbung 10 ausgebildet. Der Zenit der Außenwölbung 10 liegt genau in der Mitte des Dichtungsring-Außenseitenelements 8.

Das Dichtungsring-Innenseitenelement 7 weist eine Innenseiten-Hauptwölbung 11, die zu beiden Seiten von einer Innenseiten-Nebenwölbung 12.1 und 12.2 begrenzt wird. Die beiden im wesentlichen keilförmig angeordneten Seitenwandelemente 15, 16 enden jeweils in einem Außenfuß-Ringelement 13.1 und 13.2. Durch ein Innenfuß-Ringelement 14.1 ist die Innenseiten-Nebenwölbung 12.1 gegenüber der Innenseiten-Hauptwölbung 11 und durch ein Innenfuß-Ringelement 14.2 die Innenseiten-Nebenwölbung 12.2 gegenüber der Innenseiten-Hauptwölbung 11 abgegrenzt.

An den Seitenwandelementen 15, 16 ist jeweils ein Stützschulterkörper 17, 18 angeformt. Der Stützschulterkörper kann durchgehend und/oder abschnittsweise ausgebildet sein. Er kann an einem oder beiden Seitenwandelementen vorhanden sein.

Das Herstellen einer Rohrverbindung mit Hilfe des als Universal-Rohrdichtung ausgebildeten Ringdichtungselements 6, wie sie im Ausführungsbeispiel beschrieben ist, wird im Folgenden erläutert:

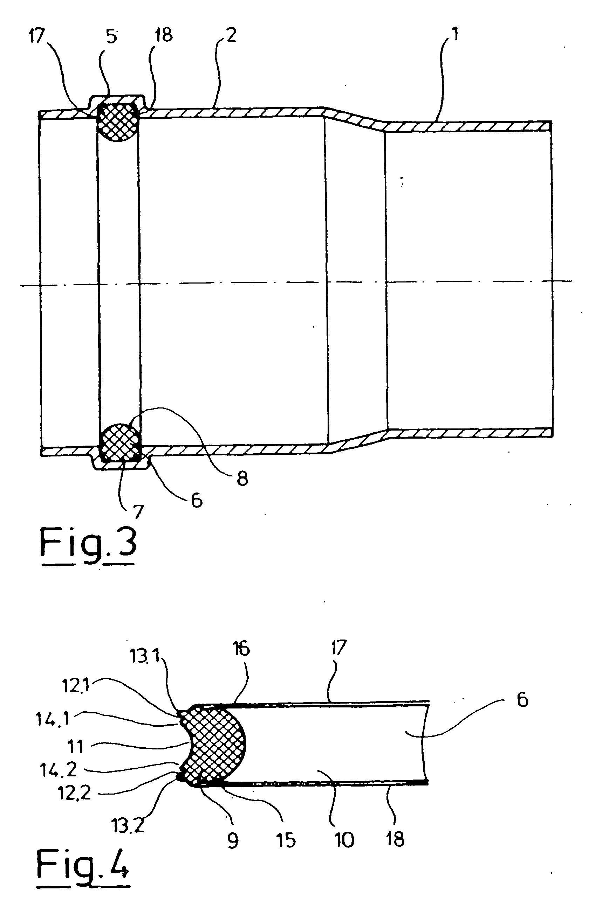

Das Ringdichtungselement 6 wird, wie Fig. 3 zeigt, in die Dichtungskammer 5 eingelegt. Die Neigung der Seitenwandelemente 15, 16 entspricht im Wesentlichen der Neigung der Seitenwandelemente der Dichtungskammer 5. Beim Einlegen in die Dichtungskammer 5 setzen die beiden sich gegenüber liegenden Außenfuß-Ringelemente 13.1, 13.2 auf den Boden der Dichtungskammer 5 auf. Die beiden Innenfuß-Ringelemente stehen dabei über dem Boden der Dichtungskammer 5. Die beiden sich gegenüberliegenden Stützschulterkörper verpressen sich an den Seitenwänden der Dichtungskammer. Hierdurch werden Maßtoleranzen ausgeglichen, die beim Formen der Dichtungskammern entstehen können.

Anschließend wird das Spitzende 4 des Kunststoffrohrs 3 in das Muffenende 2 des Kunststoffrohrs 1 geschoben. Mit seinem leicht angeschrägten Anfang schiebt sich das Spitzende 4 über die Außenseitenwölbung 10 des Ringkörpers 9. Sowohl die Anschrägung als auch die Wölbung sorgen dafür, dass der Ringkörper 9 gleichmäßig in die Dichtungskammer 5 gedrückt wird. Das Drücken des Ringkörpers 9 geht dabei hauptsächlich zu Lasten der Außenfuß-Ringelemente 13.1, 13.2 und der Innenseiten-Hauptwölbung 11.

Wie insbesondere Fig. 2 zeigt, wird dabei der Ringkörper 9 entsprechend weit in die Dichtungskammer 5 gedrückt. Je nach den Durchmesserschwankungen des Spitzendes erfolgt ein unterschiedliches Hineindrücken in die Dichtungskammer 5. Bei einem weiteren Hineindrücken in die Dichtungskammer setzen auch die Innenfuß-Ringelemente 14.1 und 14.2 auf den Boden der Dichtungskammer 5 auf. Die Außenseitenwölbung 10 ist dabei flacher als im ungepressten Zustand.

Dadurch, dass das Nachgeben der Ringdichtung beim Einschieben des Spitzendes hauptsächlich durch die Ringfüße und die Innenwölbungen übernommen wird, wird der Ringkörper aus dem elastischen Material kaum zusammengepresst. Hierdurch wird gesichert, dass der Ringkörper voll seine elastischen Eigenschaften entfalten kann. Temperaturschwankungen, die zu Durchmesservergrößerungen und Durchmesserverkleinerungen im Bereich des Muffenendes bzw. des Spitzendes führen, werden so aufgenommen, ohne dass der Ringkörper 9 seine abdichtenden Eigenschaften einbüßt.

Erfindungswesentlich ist, dass diese abdichtenden Eigenschaften von jedem eingelegten Ringdichtungselement 6 entwickelt werden. Die Montagerichtung des Ringdichtungselementes 6 ist dabei gleichgültig. Bei der Herstellung der Rohrverbindung können in die Dichtungskammer des Muffenendes die einzelnen Ringdichtungselemente an einer beliebigen Stelle eingelegt werden. Der Rohrverleger, der die Ringdichtungselemente in die einzelnen Dichtungskammern einlegt, braucht sich keine Gedanken über die spätere Einführungsrichtung des Spitzendes zu machen. Für das Einlegen der Ringdichtungselemente können somit angelernte Hilfskräfte eingesetzt werden.

## Patentansprüche

1. Ringdichtungselement (6) für eine Verbindung zweier Rohrkörper (1, 3), von denen wenigstens einer wenigstens eine Dichtungskammer (5) mit einem rechteckigen oder trapezförmigen Querschnitt aufweist, wobei:
- das Ringdichtungselement (6) einen wenigstens teilweise elastisch ausgebildeten Ringkörper (9) aufweist, der durch ein Dichtungsring-Außenseitenelement (8), ein diesem gegenüberliegendes Dichtungsring-Innenseitenelement (7) und zwei das Dichtungsring-Außenseitenelement (8) und das Dichtungsring-Innenseitenelement (7) verbindende Seitenwandelemente (15, 16) begrenzt ist,
- das Dichtungsring-Außenseitenelement (8) als eine teilkreisförmige, zu einer Mittelachse hin gewandte Außenseitenwölbung (10) ausgebildet ist und
- das Dichtungsring-Innenseitenelement (7) von der Mittelachse abgewandt ist und eine in seiner Mitte liegende teilkreisförmige Innenseiten-Hauptwölbung (11) aufweist, an die sich zu beiden seiten jeweils eine Innenseiten-Hauptwölbung (12.1, 12.2) anschließt, die jeweils durch ein Außen- und ein Innenfuß-Ringelement (13.1, 13.2, 14.1., 14.2) begrenzt ist,
**dadurch gekennzeichnet, dass** im Querschnitt im unverformten Zustand des Ringkörpers (9) gesehen, die Außenfuß- und Innenfuß-Ringelemente (13.1, 13.2, 14.1, 14.2) an zur Mittelachse parallelen Linien ausgerichtet sind und die beiden Außenfuß-Ringelemente (13.1, 13.2) länger aus dem Dichtungsring-Innenseitenelement (7) herausstehen, als die beiden Innenfuß-Ringelemente (14.1, 14.2).

2. Ringdichtungselement nach Anspruch 1, **dadurch gekennzeichnet, dass** die Seitenwandelemente (15, 16) wenigstens teilweise keilförmig zueinander angeordnet sind.

3. Ringdichtungselement nach Anspruch 1 oder 2, **dadurch gekennzeichnet, dass** an wenigstens einem der Seitenwandelemente (15, 16) ein wenigstens teilweise durchgehender Stützschulterkörper (17, 18) angeformt ist.

4. Ringdichtungselement nach Anspruch 1 oder 2, **dadurch gekennzeichnet, dass** an beiden Seitenwandelementen (15, 16) ein Stützschulterkörper (17, 18) angeformt ist.

5. Ringdichtungselement nach einem der vorhergehenden Ansprüche, **dadurch gekennzeichnet, dass** der Ringkörper (9) mit dem beiden Außen- und Innenfuß-Ringelementen (13.1, 13.2, 14.1., 14.2) und den beiden Stützschulterkörpern (17, 18) aus einem Elastomer geformt ist.

6. Ringdichtungselement nach Anspruch 5, **dadurch gekennzeichnet, dass** das Elastomer ein Gummi oder ein Weichkunststoff mit einer Härte zwischen 30 und 80 Shore-A ist.

7. Vorrichtung für eine Verbindung zweier Rohrkörper (1, 3), die jeweils mit einem Muffen- und einem Spitzende (2, 4) versehen ist, wobei wenigstens im Muffenende (2) wenigstens eine Dichtungskammer (5) mit rechteckigem Querschnitt angeordnet ist, in die ein Ringdichtungselement (6) nach wenigstens einem der Ansprüche 1 bis 6 eingelegt ist.

8. Vorrichtung nach Anspruch 7, **dadurch gekennzeichnet, dass** das Ringdichtungselement (6) sowohl mit dem ersten als auch mit dem zweiten Seitenwandelement (15, 16) zur Einsteckrichtung des Spitzendes (4) anzuordnen ist.

9. Vorrichtung nach wenigstens einem der Ansprüche 7 oder 8, **dadurch gekennzeichnet, dass** im Muffen- und/oder Spitzende (2, 4) zwei Dichtungskammern angeordnet sind.

10. Vorrichtung nach wenigstens einem der Ansprüche 7 bis 9, **dadurch gekennzeichnet, dass** die Rohrkörper Kunststoff-Inlinerrohre sind, die von einem Außenrohr umgeben sind.

11. Vorrichtung nach Anspruch 10, **dadurch gekennzeichnet, dass** das Außenrohr aus Beton gebildet ist.

## Claims

1. Annular sealing element (6) for joining two pipe elements (1, 3), of which at least one has at least one sealing chamber (5) with a rectangular or trapezoidal cross-section wherein:
- the annular sealing element (6) comprises a ring member (9) which is at least partially elastically formed and is defined by a sealing ring outer side element (8), a sealing ring inner side element (7) lying opposite thereto and two side wall elements (15, 16) connecting the sealing ring outer side element (8) and the sealing ring inner side element (7),
- the sealing ring outer side element (8) is formed as a part circle-shaped, outer side camber (10) facing a centre axis,
- the sealing ring inner side element (7) faces away from the centre axis and has a part circle-shaped inner side main camber (11) lying in its centre, to which inner side main camber (11) an inner side main camber (12.1, 12.2) connects on each side respectively, said inner side main cambers (12.1, 12.2) being defined by an outer and an inner bottom annular element (13.1, 13.2, 14.1, 14.2),
**characterised in that**, as seen in cross-section in the non-deformed state of the ring member (9), the outer bottom and inner bottom ring elements (13.1, 13.2, 14.1, 14.2) are oriented on lines parallel to the centre axis and the two outer bottom ring elements (13.1, 13.2) project further out of the sealing ring inner side element (7) than the two inner bottom ring elements (14.1, 14.2).

2. Annular sealing element according to claim 1, **characterised in that** the side wall elements (15, 16) are arranged at least partially in the form of a wedge relative to each other.

3. Annular sealing element according to claim 1 or 2, **characterised in that** an at least partially continuous support shoulder element (17, 18) is formed on at least one of the side wall elements (15, 16).

4. Annular sealing element according to claim 1 or 2, **characterised in that** a support shoulder element (17, 18) is formed on both side wall elements (15, 16).

5. Annular sealing element according to one of the preceding claims, **characterised in that** the ring member (9) is formed with the two outer and inner bottom ring elements (13.1, 13.2, 14.1, 14.2) and the two support shoulder elements (17, 18) from an elastomer.

6. Annular sealing element according to claim 5, **characterised in that** the elastomer is a rubber or a soft plastic with a hardness between 30 and 80 Shore-A.

7. Device for joining two pipe members (1, 3) which are each provided with a socket end and a pointed end (2, 4) wherein at least one sealing chamber (5) with a rectangular cross-section is arranged at least in the socket end (2), in which sealing chamber (5) an annular sealing element (6) is inserted according to at least one of the claims 1 to 6.

8. Device according to claim 7, **characterised in that** the annular sealing element (6) is to be arranged with the first and the second side wall element (15, 16) in the direction of insertion of the pointed end (4).

9. Device according to at least one of the claims 7 or 8, **characterised in that** two sealing chambers are arranged in the socket and / or pointed end (2, 4).

10. Device according to at least one of the claims 7 to 9, **characterised in that** the pipe elements are plastic inliner pipes which are enclosed by an outer pipe.

11. Device according to claim 10, **characterised in that** the outer pipe is made of concrete.

## Revendications

1. Garniture d'étanchéité annulaire (6) pour l'assemblage de deux corps de tubes (1, 3) dont l'un au moins comporte au minimum une chambre d'étanchéité (5) de section transversale rectangulaire ou trapézoïdale :
- dans laquelle la garniture d'étanchéité annulaire (6) comprend un corps annulaire (9) au moins partiellement élastique qui est délimité par un élément de face extérieure (8), par un élément de face intérieure (7) qui lui est opposé et par deux éléments latéraux de paroi (15, 16) reliant l'élément de face extérieure (8) et l'élément de face intérieure (7),
- dans laquelle l'élément de face extérieure (8) est configuré suivant une courbure (10) en forme de portion de cercle orientée en direction d'un axe central,
- et dans laquelle l'élément de face intérieure (7) est orienté en direction opposée à l'axe central et présente en son centre une courbure principale (11) en forme de portion de cercle que jouxtent, de chaque côté, des courbures secondaires (12.1, 12.2), délimitées par une patte extérieure (13.1, 13.2) et par une patte intérieure (14.1, 14.2),
**caractérisée en ce que** les pattes extérieures et intérieures (13.1, 13.2, 14.1, 14.2) - vues en coupe transversale et en situation de non déformation du corps annulaire. (9) - sont alignées sur des lignes parallèles à l'axe central et **en ce que** les deux pattes extérieures (13.1, 13.2) dépassent de l'élément de face intérieure (7) de la garniture annulaire (6) sur une plus grande longueur que les deux pattes intérieures (14.1, 14.2).

2. Garniture d'étanchéité annulaire selon la revendication 1, **caractérisée en ce que** les éléments latéraux de paroi (15, 16) sont disposés, au moins pour partie, en oblique l'un par rapport à l'autre.

3. Garniture d'étanchéité annulaire selon la revendication 1 ou 2, **caractérisée en ce que** dans le prolongement d'au moins un des éléments latéraux de paroi (15, 16) et attenant à celui-ci est agencé un corps d'appui (17, 18) qui, au moins pour partie, est configuré d'un seul tenant.

4. Garniture d'étanchéité annulaire selon la revendication 1 ou 2, **caractérisée en ce que** dans le prolongement des deux éléments latéraux de paroi (15, 16) et attenant à ces derniers est agencé un corps d'appui (17, 18).

5. Garniture d'étanchéité annulaire selon l'une quelconque des revendications précédentes, **caractérisée en ce que** le corps annulaire (9) comprenant les deux pattes extérieures (13.1 , 13.2), les deux pattes intérieures, (14.1, 14.2) et les deux corps d'appui (17, 18) est formé dans un élastomère.

6. Garniture d'étanchéité annulaire selon la revendication 5, **caractérisée en ce que** l'élastomère est un caoutchouc ou une matière plastique souple d'une dureté comprise entre 30 et 80 Shore-A.

7. Dispositif d'assemblage de deux corps de tubes (1, 3) dont chacun comprend un embout femelle (2) et un embout mâle (4), dans lequel au moins l'embout femelle (2) comporte au minimum une chambre d'étanchéité (5) de section transversale rectangulaire dans laquelle est placée une garniture d'étanchéité (6) selon au moins l'une des revendications 1 à 6.

8. Dispositif selon la revendication 7, **caractérisé en ce que** la garniture d'étanchéité (6) peut être disposée aussi bien avec le premier qu'avec le deuxième élément latéral de paroi (15, 16) orienté dans le sens d'introduction de l'embout mâle (4).

9. Dispositif selon au moins l'une des revendications 7 ou 8, **caractérisé en ce que** deux chambres d'étanchéité (5) sont agencées dans l'embout femelle (2) et/ou dans l'embout mâle (4).

10. Dispositif selon au moins l'une des revendications 7 à 9, **caractérisé en ce que** les corps de tubes (1, 3) sont constitués d'un tube intérieur en matière plastique entouré d'un tube extérieur.

11. Dispositif selon la revendication 10, **caractérisé en ce que** le tube extérieur est en béton.
